# EUROPEAN PATENT APPLICATION

(11) **EP 2 533 187 A1**
(43) Date of publication of application: **12.12.2012**
(21) Application number: 12176781.8
(22) Date of filing: 01.11.2004
(51) Int. Cl.: G06Q 30/02, G06Q 30/00

(54) **System and method for distributing content using advertising sponsorship**

(30) Priority: 31.10.2003 US 516622 P
(62) Divisional of application: 04800565.6
(71) Applicant: Adknowledge, Inc., Kansas City, MO 64112 (US)
(72) Inventor: Pisaris-Henderson, Craig, Allen, Fort Myers, FL Florida 33913 (US); Garcia, Anthony, Albert, Fort Myers, FL Florida 33912 (US); Rae, David, Clouston, Naples, FL Florida 34108 (US); Neumann, Peter, Thomas, Fort Myers, FL Florida 33919 (US); Williams, Jason, Benhard, Cape Coral, FL Florida 33990 (US)
(74) Representative: Cozens, Paul Dennis

(57) **Abstract**

A digital content distribution system, the system comprising: means for receiving, from a first digital content provider: a first digital content item identifier, a digital content item attribute, and a digital content item access restriction; means for receiving, from a second digital content provider: a second digital content item identifier, a digital content item attribute identifier, and a digital content item access modifier; means for selecting a first digital content item identifier in dependence on the received digital content item attribute identifier; means for modifying the digital content item access restriction in dependence on the received digital content item access modifier; means for associating the selected first digital content item identifier with the second digital content item identifier; and means for offering a user access to a first digital content item and an associated second digital content item, the first and second digital content items being identified in dependence on the corresponding first and second digital content item identifiers, wherein the degree of access is determined by the modified digital content item access restriction.

## Description

This present application claims the benefit of United States Provisional Application entitled "System and Method for Distributing Content Using Advertising Sponsorship" which was filed on October 31, 2003 and assigned Serial No. 60/516,622, which is incorporated by reference in its entirety herein.

### BACKGROUND OF THE INVENTION

### 1. Field of the Invention

The present invention relates generally to providing digital content to internet users, and more particularly relates to systems and methods for distributing content using advertising sponsorship to discount the cost of such digital content and provide analytical data to the advertising sponsors of the effectiveness of such sponsorship.

### 2. Background of the Related Art

The internet is a vast and comprehensive medium which now includes millions of unique users. Because of the ease in which advertisers can distribute advertising messages, the internet has become a popular advertising distribution vehicle. However it has become increasingly difficult to convert "eyeballs" on the internet viewing an advertisement into consumers of the product or service being advertised. The cost per thousand views, or CPM, pricing model is becoming increasing difficult to justify. Advertisers need to not only take advantage of the vastness of the internet, they must be able to take advantage of the two-way communications channel to effectively target advertising to the proper demographic audience.

The ubiquity of the internet and the increased speed at which the average individual can access the internet has also created a significant business in the distribution of digital copyright content, such as music and movie files. While there are a number of legitimate music distribution businesses on the internet, such as iTunes.com, there are also several widely utilized and well publicized music distribution businesses which have provided software that, while it has legitimate uses, allows users to circumvent compensating the copyright holder by providing a system that gives its users access to free music downloading and music file sharing. Services such as Kazaa, Morpheus, and Grokster are thought of in this regard. Widespread downloading of copyright content at low cost (often at no cost) to the user has resulted in below market compensation to many copyright owners.

Clearly, the success of services which provide users the ability to download free music demonstrates the desire of individuals to access a large variety of copyrighted content without charge. Accordingly, there exists a need for a system and method to enable advertisers to reach users seeking such a service yet still providing fair compensation to the copyright owner.

### SUMMARY OF THE INVENTION

It is an object of the present invention to allow internet users (also referred to herein as "download customers," "end users," "customers," and "users") to acquire digital copyright works at the lowest cost to such users as possible.

It is another object of the present invention to provide a system and method for compensating owners of digital copyright works at market or near-market compensation for the downloading of their works by download customers.

It is a further object of the present invention to provide a system and method which allows advertisers (also referred to herein as "advertising sponsors") to reach a pool of download customers meeting selected demographic criteria by associating their advertising content with digital copyright works having features or attributes desired by such customers.

It is a still further object of the present invention to provide a system and method for providing analytical data relating to a download transaction, including whether a download customer initially inquiring about a digital copyright work actually completed the transaction by downloading the work, the associated download fees, and customer demographic data.

It is yet another object of the present invention to enable advertising sponsors to monitor the effectiveness of associating their advertising content with certain digital copyrighted works by monitoring analytical data relating to download transactions.

These and other objects of the invention, which will become apparent with reference to the disclosure herein, are accomplished by a system and method which provides download customers with the ability to download of digital content which is protected by copyright, such as music, movies or graphics, in a manner which is free, or discounted, to the download customer. The content is associated with an advertising sponsor, based on analytical data aggregated by both the internal transaction and other user behavior, in which the advertising sponsor pays the copyright owner the requested consideration for the download to the download customer. In an exemplary embodiment, the customer agrees to receive advertising or other promotional content from the advertiser.

The system provides advertisers with the ability to sponsor (either fully or partially) certain items of digital copyright content for download by download customers. Such advertising sponsors would be charged a fee, payable to the copyright owner, when the download customer selects to download sponsored copyright content. The system may monitor information about the download transaction, such as, e.g., (a) the "download result," e.g., whether a download customer initially inquiring about a digital copyright work completed the transaction by downloading the work or terminated the session, (b) the price and other terms as charged by the copyright owner and paid by the download customer and/or the advertising sponsor, (c) the demographics of the download customer, as supplied by the download customer itself or through the tracking of websites visited by the download customer, and (d) the characteristics of the copyright content selected and/or downloaded by the download customer.

Through the process of analyzing this information, e.g., the demographics of the download customer and/or the content of the downloaded copyright content, and matching that to the desired demographic reach of the advertising sponsor's content, download customers will receive relevant well-targeted advertising which offsets the cost otherwise charged to download customers to receive the copyright content.

Implementation of this system and methods allows copyright owners to be compensated for their work by the advertising sponsors. Advertising sponsors benefit by the ability to have the preferences of download customers identified during the download transaction, including the selection of copyright content and the price accepted or rejected by such download customers. Finally, download customers benefit by having the ability to access content at no cost and to receive relevant advertising and promotional messages delivered by the advertising sponsor.

### BRIEF DESCRIPTION OF THE DRAWINGS

Further features of the invention, its nature and various advantages will be more apparent from the accompanying drawings and the following detailed description of preferred embodiments
Figure 1 is a flow diagram providing an overview of the operation of the present method for distributing copyright content with an associated advertising sponsorship in accordance with the present invention.
Figures 2-3 are additional flow diagrams providing an overview of the operation of the present method for distributing copyright content with an associated advertising sponsorship in accordance with the present invention.
Figure 4 is a simplified data flow diagram illustrating data transfer between a demographics logging server and an end user, such as a download customer, in accordance with the present invention.
Figure 5 is a simplified block diagram of the present system for distributing copyright content with an associated advertising sponsorship, in accordance with the present invention.

### DETAILED DESCRIPTION OF THE PREFERRED EMBODIMENTS

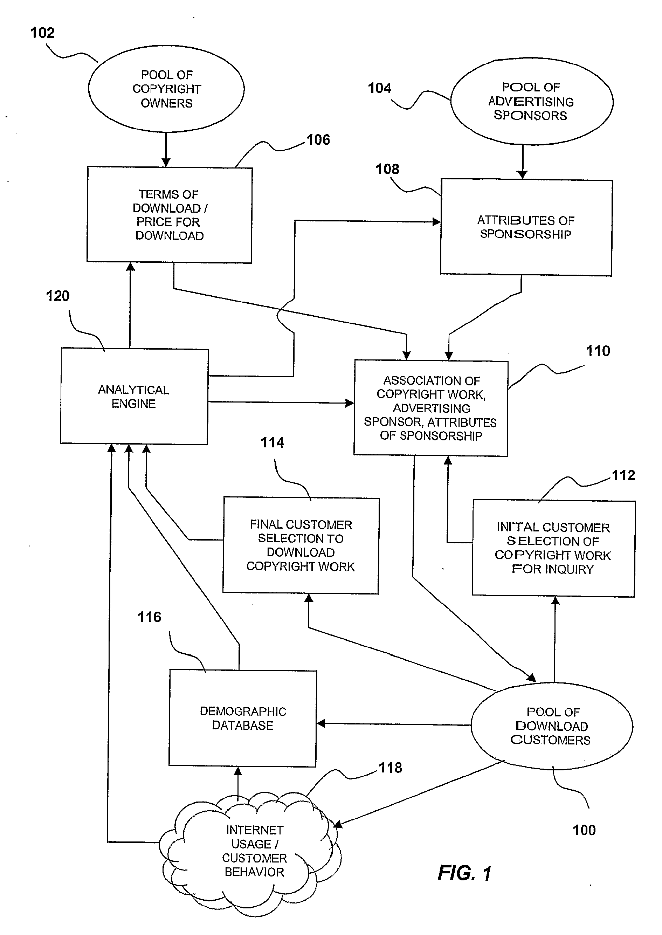

Figure 1 is a flow diagram providing an overview of the data flow of the present method for distributing digital copyright content with an associated advertising sponsorship using a digital data network, such as the internet. The systems and methods of the present invention provide a vehicle for linking a pool of download customers 100 with a pool of copyright owners 102 and a pool of advertising sponsors 104. In particular Figures 1 illustrates the data flow relating to the download transaction, e.g., the initial inquiry about digital copyright works by the download customer and the actual download results, e.g., whether the download customer actually completes the transaction and downloads the digital copyright content or terminates the session, and data relating to such download transaction, as will be described in greater detail herein.

With continued reference to Figure 1, the copyright owners 102 establish terms and conditions under which they grant a license to the download customers 100 to download the copyrighted work, and such data may be maintained in a data medium or database 106. The terms will generally include the price payable to download the content and any applicable restrictions on the content, e.g., the content can be downloaded to a single personal computer, phone, or PDA, but not otherwise distributed.

The term "digital copyright work" as used herein is understood to include any original work that can be distributed in digital form, including music, clip art, digital photos, digital video, and the like. For purposes of a specific example, the copyrighted work may take the form of music files in a digital format. However, it will be appreciated that the present invention is equally applicable to the distribution of other content as well. Throughout the specification, the terms "copyright work," "work," "copyright content," "digital content," and "content" shall be used interchangeably.

The advertising sponsors 104 desire to distribute advertising content to a relevant, targeted audience. The advertising sponsors 104 make this selection based on known demographics of individuals as well as expected demographics associated with known interests of a group of individuals. In the case of music downloading, market research may suggest certain demographics can be presumed based on the genre of the music selected, the author, the time of the download, history of music selections, and the like. These demographics can be taken into account by an advertising sponsor to select recipients of the advertising content and to customize the advertising content to the audience. While not a perfect association, demographics such as age, affluence, urban/rural location, sex and other demographics can be inferred in this manner. For example, those individuals downloading the genre of heavy metal are likely to have different demographics from another individual downloading opera or classical music. Further, demographic data collected for individual download customers, which is either supplied by the download customer or derived from a log of websites visited, can supplement and improve these associations.

The advertising sponsor 104 may select attributes of the digital copyright content or types of copyright content that it is interested in sponsoring. Data concerning such attributes may be stored in a data medium or database 108. These attributes may include sponsorship cost per download (which may represent the full price of the download payable to the copyright owner, or a fixed portion or percentage of the price), music type or genre, author, performer, and the like. Based on the advertising sponsor's selected attributes, copyright content (as provided by the copyright owners 102) is identified having attributes which match the attributes of the advertising sponsor. For example, the advertising sponsor may wish to sponsor country music, which is believed, based on market research to be of interest to potential customers. Consequently, all copyright works having the attributes "country music" are identified. Database 110 may optionally store data relating to copyright works matching particular advertising sponsor attributes. The association of copyright works and an advertising sponsor can be performed at any time, e.g., prior to a request from a download customer to download the copyright content and stored on database 110, or after the copyright content has been requested by a download customer (through a search, for example).

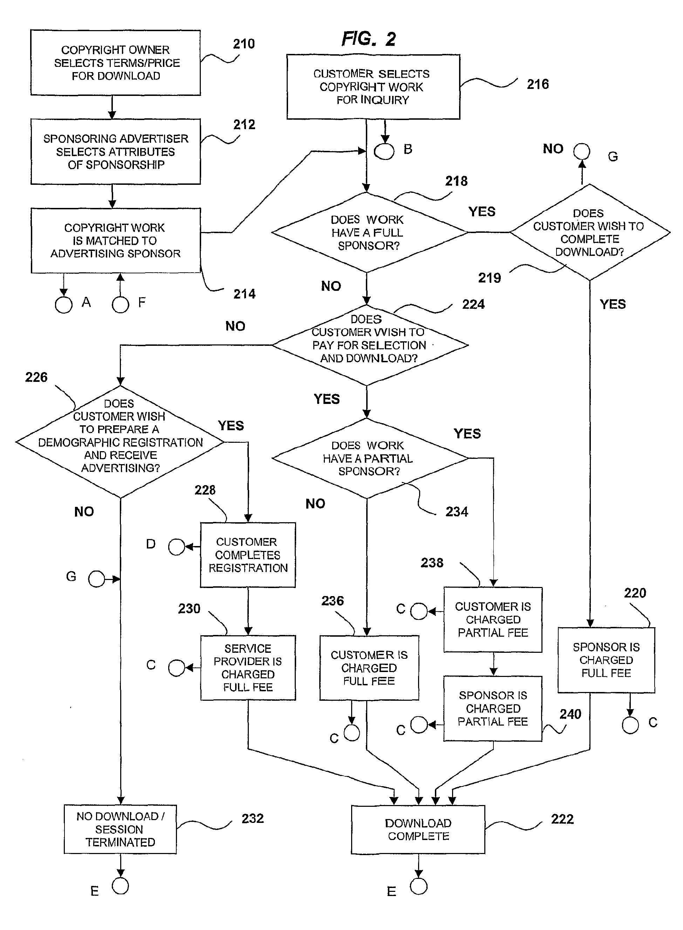

A download customer's initial inquiry about a digital copyright work, represented by data item 112, is compared by the system with the data regarding the association of digital copyright work and advertising sponsors 110. A listing of available advertising sponsors is provided to the download customer, along with the certain attributes of sponsorship 108, e.g., final cost to the download customer. Alternatively, if no advertising sponsors are available, this information is conveyed to the download customer. The download customer may then decide whether to download the copyright work. Data associated with the download result, e.g., whether the download customer (1) actually completes the transaction and downloads the copyright content or (2) exits without downloading any copyright content, is represented at 114. The selection process for downloading the copyright content is described in greater detail hereinbelow in Figures 2-3. The download customer 100 may complete a demographic data registration form and agree to receive targeted advertising. Such demographic data may be stored in demographic database 116. Customer behavior 118, e.g., listening or viewing habits of the user of the downloaded works, a log of websites visited by the download customer 100 or the number frequency of digital copyright works downloaded by the download customer, or total fees paid by the download customer, etc., may be used to supplement the customer-supplied information in the demographic database 116.

Analytical engine 120 is an application (which may reside on download customer, an advertising server, etc.) that receives data from multiple sources and provides valuable feedback to advertising sponsors 104 (and copyright owners 102) about the downloading of copyright content by the download customers 100. (Without the analytical engine 120, the advertising sponsor typically only receives data concerning total charges incurred as a result of completed downloads of copyright works. Without such analytics, the advertising sponsor 104 would not know, for example, how many download customers inquired about copyright content, but never completed the download transaction, because the fee was too high, for example.) The analytical engine 120 may associate additional data with particular download customers (e.g., by customer ID) and session or transaction (e.g., by session ID). Such data may include the demographic data 116 associated with the download customer, augmented by customer behavior 118. Data concerning the matching of copyright content with advertising sponsors may also be supplied. Analytical engine 120 also receives data associated with the download result 114, e.g., whether the download customer completed the download or terminated the session, the price for the copyright content paid by the advertising sponsor 104 (if any), the price for the copyright content paid by the download customer 100 (if any), the time of the download, etc.

Output of the analytical engine 120 may be produced by aggregating the data received from the various sources, such as those described hereinabove. For example, the analytical engine can provide data to advertising sponsors concerning the rate of completed downloads 114 to the total number of inquiries received for a particular copyright work 112, augmented by demographic data 116 and customer behavior 118. When provided in the context of partial sponsorship, an advertising sponsor 104 can test the effectiveness of the sponsorship. For example, the advertising sponsor can test the price elasticity, e.g., to decide whether to lower or raise the amount contributed to the overall fee for downloading the copyright work. Given a poor rate of completed downloads to initial inquiries, a sponsoring advertiser may (1) increase the level of partial sponsorship to increase downloads, or (2) drop sponsorship entirely for a specific copyright work, or a specific attribute such as genre or artist, etc. or demographic. Incremental variations of the partial sponsorship may enable the advertising sponsor to determine which course of action is most appropriate.

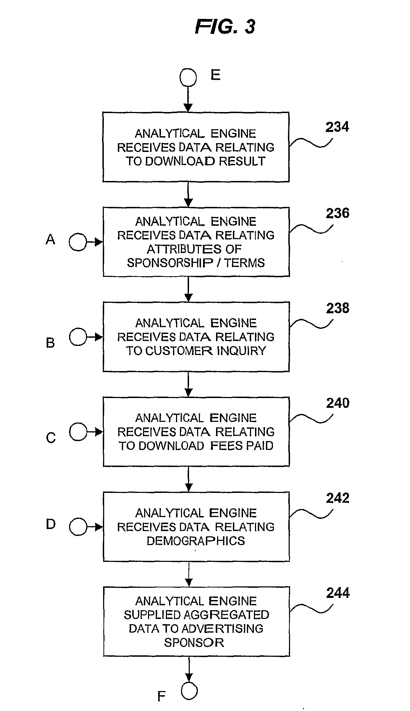

The process steps associated with the system described herein is illustrated in greater detail in Figure 2. The copyright owner(s) 102 establish terms and conditions under which they grant a license to the download customers to download the copyrighted work at step 210. The advertising sponsor(s) 104 may select attributes of the copyright content or types of copyright content that it is interested in sponsoring at step 212, The particular copyright work is then matched to the advertising sponsor 104 at step 214. The download customer 100 may make an initial "selection for inquiry" about the copyright work at step 216, typically including an implicit request for download pricing. Such selection for inquiry is typically a distinct, prior event from the "selection to download" (steps 219, 224), wherein the download process is initiated. It is understood that the selection to download may include an affirmative selection, e.g., "click" by the download user, or it may be an implicit selection, e.g., where the download user has selected a copyright work that is fully sponsored and download occurs automatically. It is understood that steps 210-216 may occur sequentially as shown in exemplary embodiment; however, the sequence of steps is not critical to performance of the method described herein. For example, the sponsoring advertiser may vary, as an attribute of sponsorship, a percentage of the total cost associated with a download, irrespective of the variations of the actual price made by the copyright owner. Similarly, the matching of copyright works with sponsoring advertisers may occur before or after the download customer makes an inquiry regarding a copyrighted work. It is understood that each of these steps 210-216 may be repeated at different rates throughout the process described herein. For example, the copyright owner may update prices and terms for download periodically based on market conditions, feedback from the analytical engine 120, etc., irrespective of updates by the advertising sponsor(s). Data relating to the download customer inquiry concerning the copyright work may be conveyed to the analytical engine 120 at step 238 (Figure 3).

At step 218 the system determines whether the copyright work is fully sponsored. If the copyright work is fully sponsored, i.e., the advertising sponsor is willing to pay the full amount requested by the copyright owner for the requested work, the advertising sponsors advertising content is appended to the selected content. If the download customer chooses to complete the download (step 219), the advertising sponsor account will be debited (step 220), and the copyright owner's account will be credited for the amount requested by the copyright owner for the selected work. It is understood that step 219 may be bypassed if the system is configured to automatically download selections that are fully sponsored without further input from the download customer. The selected content and advertising content are downloaded to the download customer at no cost to the download customer (step 222). (It is understood that the sequence of steps 220-222 of the exemplary embodiment is not critical to the process described herein.) The data associated with the completion of the download, also referred to herein as the "download result," i.e., whether the download customer actually completed the download of the copyright work, is conveyed to the analytical engine 120 at step 234 (Figure 3). Further information conveyed to the analytical engine concerns the attributes and terms associated with the copyright work (step 236), the initial selection/inquiry of the download customer (step 238), the fees paid by the download customer and/or the advertising sponsor (step 240). The order of steps 234-242 illustrated in Figure 3 is not critical to the invention as described herein.

If the copyright work is not fully sponsored, the download customer can be queried, as illustrated in Figure 2, to determine if the download customer wishes to complete the download and pay the fee (step 224). If the customer does not wish to pay the associated fee, the customer is provided with the option of completing a demographic data registration form and agreeing to receive targeted advertising in exchange for receiving the content at no charge (step 226). If the customer agrees to provide this information, a registration form is provided to the download customer to complete (step 228). In this case, the download service provider pays the copyright owner for the download (step 230). Upon completion of the form, the download customer will receive the copyright work selected (step 222). As discussed above, data associated with the completed download is supplied to the analytical engine (see steps 234-242 of Figure 3). The ability to receive content in exchange for providing demographic data is an optional feature of the system. In addition, the download service provider may limit the number or downloads a download customer can receive in this fashion, such as once a month, or some other period in which the download service provider sees value in receiving updated demographic data. If the download customer does not wish to either purchase the copyright work or provide this demographic information, the session is terminated (step 232). Data associated with the terminated download is supplied to the analytical engine (see steps 234-242 of Figure 3).

If the customer does wish to purchase the copyright work, the process may proceed differently if the copyright work is partially sponsored by a advertising sponsor (step 234). If there is no advertising sponsor, the customer is charged the amount specified by the copyright owner (step 236) and the download to the download customer is completed (step 222). As discussed above, data associated with the completed download is supplied to the analytical engine (see steps 234-242 of Figure 3).

If the copyright work is partially sponsored by an advertising sponsor, i.e., the advertising sponsor is only willing to pay a portion of the price demanded by the copyright owner, the price that the download customer will pay will be discounted by the amount that the sponsor is willing to pay. In this case, the download customer pays the discounted amount for the content (step 238) and the advertising sponsor pays the sponsorship amount to the copyright owner (step 240). Data associated with the completed download is supplied to the analytical engine (see steps 234-242 of Figure 3).

When compared with the case of full sponsorship of a copyright work, it is expected that this partial payment model would significantly reduce the number of times the copyright work would be downloaded by the download customers. Thus, given a fixed price for the download and reduced overall number of completed downloads, the revenue derived by the copyright owner would be reduced. Similarly, the number of advertising impressions for the advertising sponsor would also be reduced. It is expected that normal market forces may correct this imbalance such that the copyright owner and advertising sponsor may modify the terms/attributes to reach a modified fully sponsored price for the copyright work. Alternatively, given a fixed price for the copyright work, the advertising sponsor may adjust the amount of sponsorship to maximize the return of its advertising expenses. For example, the analytical engine 120 provides useful information on the ratio of completed downloads (step 222) to initial inquiries (step 216), as a function of the level of partial sponsorship (step 212), which correspond to data items 112, 114, and 108 of Figure 1, respectively. Accordingly, the advertising sponsor can maximize the rate of completed downloads by varying the level of partial sponsorship. Moreover, the advertiser can view the demographics of download customers that do not complete the download transaction (step 232), and determine whether attributes of sponsorship should be modified to attract the business of such download customers, or alternatively, that such download customers are outside the demographic reach of the advertising sponsor.

In another exemplary embodiment, if the download customers have well defined demographic profiles, an advertising sponsor can select to sponsor a download customer making a selection, rather than the selection itself. For example, if a download customer seeking to download a copyright work has a demographic data file associated with that download customer that matches the demographic profile of the advertising sponsor, the advertising sponsor can sponsor any selection made by the download customer, and the advertising content will be appended to the selected content. In this regard, the advertising sponsor still pays the copyright owner the amount set for the selected content.

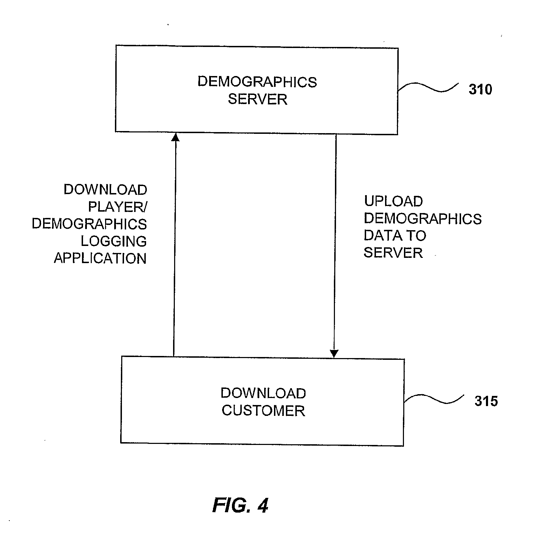

As noted above, an important aspect of the invention from the advertising sponsor's perspective is the ability to target advertising content to a well defined demographic group. To help facilitate this, a proprietary music player/event logger software application may be provided to the download customers and can be used as an interface to the system by the download customers. Figure 4 illustrates a simplified overview illustrating this concept. In Fig. 4 a demographics server 310, which is a stand alone server or a component of another server in the system, downloads a software application to download customers 315 wishing to use the present system. The software application provides a proprietary music player that is compatible with the copyright content files provided by the present system. Preferably, the file format of the copyright content files is proprietary such that the downloading and use of the files can be accurately tracked by the software application. This demographic tracking data logged by the software application is then periodically uploaded to the demographics server 310 such that a comprehensive demographic profile of the download customer can be established. The application software can log events limited to the downloaded content, such as times of use, type of use (i.e., transfer to a cellular phone, a portable digital assistant (PDA), a portable music player, such as an Apple® iPod® or MP3 player), etc. Alternatively, the application software residing on the download customer computer 315 can develop a more comprehensive demographic profile by tracking internet use, and analytics, etc. In addition, upon installation of the software application, the download customer can be required to complete a registration form in which basic demographic information is collected to be included in the demographic database record of the download customer. In an exemplary embodiment, such application software is the analytical engine 120, above.

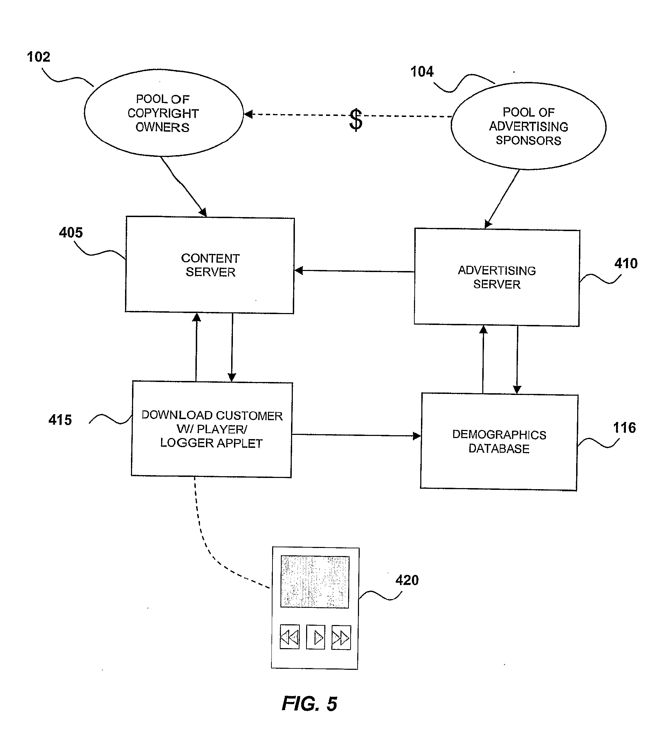

Figure 5 is a simplified block diagram of an embodiment of a system in accordance with the present invention. Generally, the system is deployed on a public data network, such as the internet. Copyright owners 102 access a content server 405 and provide copyright content as well as terms and conditions for the distribution of the content. Preferably, the content server 405 provides a graphical user interface (GUI) to the content providers to enable efficient account information entry. Similarly, advertising sponsors 104 access the system through an advertiser server 410 which provides an interface for advertising sponsors to input advertising content, sponsorship terms, demographic conditions and the like. Preferably, the interface is a GUI which allows advertising sponsors to readily manage account functions associated with the advertiser account, including funding and results tracking. The advertising server 410 is in communication with the content server 405 to enable matching of advertising content with the copyright content and to enable account processing whereby advertiser funds can be transferred to the account of the content provider for sponsored downloads.

The end users, i.e., download customers, are generally equipped with conventional personal computers having an appropriate communications interface to access the internet. The end user computer 415 is provided with a suitable software application which includes the media player application as well as demographic tracking features. The end user computers 415 are in communication with the content server 405 as well as a demographics database 116 which periodically receives demographic tracking data from the end user computers 415. The demographics database is also in communication with the advertising server 410 so that advertising sponsors can be provided with the demographic data. The analytical engine (not shown in Figure 5) may reside, e.g., on the user computer 415 or the advertising server 410 and aggregate the data as described hereinabove.

Preferably, in addition to the end user computers 415, portable players 420 can be associated with the system and interface with the end user computer and software application associated therewith. The portable player will allow download customers to transfer downloaded content to a portable format for more flexible use, in a known manner (e.g., cellular telephones, PDAs, portable music players, such as Apple® iPod® devices, MP3 players and the like). The portable player 420 is preferably file-format-compatible with the downloaded copyright content and may include provisions for providing advertising impressions as well, either on a display of the portable player or in the form of an audio advertisement that is presented to the download customer prior to or after the copyright content has been listened to by the download customer. The portable player will preferably include a logging function which captures the listening habits of the download customer and will upload this information to the user computer 415 for transfer to the demographics database 116. The analytical engine (not shown in Figure 5) may reside, e.g., on the portable player 420 and aggregate the data as described hereinabove.

Although in Fig. 5 the content server 405, advertiser server 410 and demographics database 116 are illustrated as separate distributed computer hardware, it will be appreciated that some or all of these features can be combined in a single computer server with suitable software to support the content management features, advertiser management features and download customer features.

From the description set forth above, it will be appreciated that the systems and methods of the present invention address at least two known problems. First, it provides a vehicle to overcome the well publicized problem of users of the internet engaging in the downloading of music and other copyrighted materials without the copyright owner being compensated. Second, it provides a system to exploit the internet as a vast medium for advertising sponsors who are continually looking for unique ways to deliver advertising content to a more targeted audience. By matching the demographics of selected content to be downloaded by a customer with the desired demographics of the advertising content, well targeted advertising can be delivered to customers. Copyright owners benefit by being compensated for their work by the advertising sponsors. Advertisers benefit by the ability to have customer preferences identified in the selection of content. Customers benefit in the ability to access content at no cost or discounted cost and to receive relevant advertising and promotional messages delivered by the sponsor.

The present invention has been described herein in connection with preferred embodiments thereof. It will be appreciated that provided the detailed disclosure herein, those skilled in the art may envision how the present invention could be practiced using alternative embodiments and variations thereof. Such variations are intended to be within the scope of the present invention which is defined by the claims appended hereto.
Generally, aspects of the invention may comprise features described in one or more of the following clauses:
Clause 1. A method for distributing digital copyright work having a copyright owner, the method comprising: selecting, by a download customer, a digital copyright work for inquiry; associating an advertising sponsor with said digital copyright work based on attributes at least partially selected by the advertising sponsor; and upon selection of said digital copyright work for download, charging the sponsoring advertiser according to said attributes.
Clause 2. The method as recited in Clause 1, wherein the step of associating an advertising sponsor with said digital copyright work comprises determining a portion of a download fee to be paid by the advertising sponsor, and wherein the step of charging the sponsoring advertiser according to said attribute comprises charging the advertising sponsor the portion of the download fee.
Clause 3. The method as recited in Clause 1, further comprising receiving data relating to a download transaction.
Clause 4. The method as recited in Clause 3, further comprising receiving data comparing a frequency in which download customers select a digital copyright work for download compared with a frequency in which download customers select the digital copyright work for inquiry.
Clause 5. The method as recited in Clause 4, further comprising: receiving data relating to download fees charged when download customers select a digital copyright work for download.
Clause 6. The method as recited in Clause 1, further comprising receiving demographic data of the download customer.
Clause 7. The method as recited in Clause 1, further comprising receiving data relating to behavior of the download customer.
Clause 8. The method as recited in Clause 7, wherein the step of receiving data relating to behavior of download customers comprises receiving data relating to a log of web site visited by said download customers.
Clause 9. The method as recited in Clause 1, wherein the step of associating an advertising sponsor with said digital copyright work further comprises aggregating data relating to the download transaction, to the behavior of download customers, and to demographic data of the download customer.
Clause 10. The method as recited in Clause 9, wherein the step of aggregating data comprises supplying aggregated data to the advertising sponsor.
Clause 11. The method as recited in Clause 10, further comprising: after the step of supplying aggregated data to the advertising sponsor, modifying said attributes.
Clause 12. The method as recited in Clause 11, wherein the step of modifying said attributes comprises one of lowering and raising a portion of a download fee to be paid by the advertising sponsor upon selection of said digital copyright work for download.
Clause 13. The method as recited in Clause 11, wherein the step of modifying said attributes comprises one of lowering and raising a portion of a download fee to be paid by the advertising sponsor upon selection of said digital copyright work for download.
Clause 14. The method of Clause 1, wherein the digital copyright work is a media file, and wherein the step of associating the advertising sponsor with said digital copyright work based on attributes at least partially selected by the advertising sponsor comprises selecting a genre of music by the advertising sponsor.
Clause 15. The method as recited in Clause 1, further comprising: providing the download user with the option of paying at least a portion of a download fee for downloading the digital copyright work.
Clause 16. The method as recited in Clause 1, further comprising: providing the download user with the option of providing demographic information in exchange for waiving a download fee to download the digital copyright work.
Clause 17. A computer system for distributing digital copyright works having a copyright owner, the computer system comprising: a copyright server maintaining a database in computer readable media comprising digital copyright works and terms associated with download thereof by download customers; an advertising server maintaining a database in computer readable media comprising attributes for associating digital copyright works with an advertising sponsor and programmed to match digital copyright works selected by download customers with said attributes.
Clause 18. A computer system as recited in Clause 17, further comprising: an analytical engine receiving data receiving data relating to a download transaction, and supplying said data to said advertising server.
Clause 19. A computer system as recited in Clause 18, wherein the analytical engine further receives demographic data of the download customer and supplies said demographic data to said advertising server.
Clause 20. A computer system as recited in Clause 19, wherein the analytical engine further receives data relating to behavior of the download customer and supplies said data relating to behavior of the download customer to said advertising server.
Clause 21. A computer system as recited in Clause 17, further comprising: an analytical engine programmed to receiving data receiving data relating to a download transaction, to demographic data of the download customer and to behavior of the download customer, to aggregate said data and to supply said data to said advertising server.

## Claims

1. A digital content distribution system, the system comprising:
means for receiving, from a first digital content provider (102):
a first digital content item identifier,
a digital content item attribute, and
a digital content item access restriction (106);
means for receiving, from a second digital content provider (104):
a second digital content item identifier,
a digital content item attribute identifier, and
a digital content item access modifier (108);
means for selecting a first digital content item identifier in dependence on the received digital content item attribute identifier;
means for modifying the digital content item access restriction in dependence on the received digital content item access modifier;
means (110) for associating the selected first digital content item identifier with the second digital content item identifier; and
means for offering a user (100) access to a first digital content item and an associated second digital content item, the first and second digital content items being identified in dependence on the corresponding first and second digital content item identifiers, wherein the degree of access is determined by the modified digital content item access restriction.

2. A system according to claim 1, further comprising:
means for receiving user data from a user (100) of the system, the user data comprising a request for information regarding or a request for access to a digital content item.

3. A system according to claim 2, further comprising:
means for forwarding the user data to at least one of the first digital content provider and the second digital content provider.

4. A system according to any preceding claim 2 or 3, wherein the means for modifying the digital content access restriction is adapted to modify access to the first digital content item from partial access to full access.

5. A system according to any of claims 2 to 4, wherein at least one of:
the means for associating;
the means for modifying; and
the digital content item attribute identifier;
is adapted in dependence on the user data.

6. A digital content distribution system, for distributing digital content over a digital data network, the system comprising:
a first database for storing digital content item attributes corresponding to first digital content provided by a first digital content provider;
a second database for storing one or more attributes corresponding to each of a plurality of second digital content providers;
means for matching the first digital content with at least one of the second digital content providers, in dependence on the stored attributes;
means for associating the first digital content with at least one of the matching second digital content providers; and
means for accessing the first digital content and the second digital content associated with the at least one matched second digital content provider; and
means for providing the first digital content and second digital content for at least one of the matched second digital content providers, for download over the network by a user.

7. A system according to claim 6, further comprising:
means for receiving user data comprising a decision regarding the digital content subject to the request from the user, the receiving means being coupled to the digital content accessing means, such that if the decision is for acceptance of the first digital content, the accessing means accesses and providing means provides the first digital content and second digital content for at least one of the matched second digital content providers, for download by the user over the network.

8. A system according to claim 6 or 7, wherein the matching means includes a database for storing matches between the first digital content from the stored data therefor, and the second digital content providers, based on the one or more attributes of each of the second digital content providers.

9. A system according to any preceding claim, further comprising:
means for determining digital content item access data in dependence on user access of digital content items; and
means for forwarding the digital content access data to at least one of the first digital content provider and the second digital content provider.

10. A system according to claim 9, wherein the first digital content item identified by the first digital content item identifier is adapted to enable the digital content access data to be determined in dependence on user interaction with the first digital content item.

11. A system according to claim 9 or 10, wherein the digital content access data is determined by the means used by the user to access the first digital content item.

12. A system according to any preceding claim, further comprising:
means for selecting the second digital content provider from a plurality of digital content providers in dependence on the or a digital content item attribute identifier.

13. A system according to any preceding claim, wherein the means for modifying the digital content access restriction is adapted to provide partial access to the first digital content item.

14. A system according to any of claims 2 to 5 or 7 to 13, wherein the user data comprises demographic data regarding the user.

15. A system according to any of claims 2 to 5 or 7 to 14, wherein user demographic data is determined from the user request.
